# EUROPÄISCHE PATENTSCHRIFT

(11) **EP 1 521 229 B1**
(45) Veröffentlichungstag und Bekanntmachung des Hinweises auf die Patenterteilung: **23.03.2011**
(21) Anmeldenummer: 04103995.9
(22) Anmeldetag: 20.08.2004
(51) Int. Cl.: G09F 13/04, G09F 13/16, G09F 9/35, G09F 9/33

(54) **Anzeige mit Hinterleuchtungseinheit**
Display with back-lighting system
Dispositif d'affichage avec dispositif d'éclairage par l'arrière

(30) Priorität: 30.09.2003 DE 10345884
(43) Veröffentlichungstag der Anmeldung: 06.04.2005
(73) Patentinhaber: Continental Automotive GmbH, 30165 Hannover (DE)
(72) Erfinder: Förderer, Roland, 78078, Niedereschach (DE); Morin, Basile, 60000, Allonne (FR); Wolf, Jürgen, 78048, Villingen-Schwenningen (DE)

(56) Entgegenhaltungen:
- EP-A- 0 962 694
- US-B1- 6 215 409
- US-B1- 6 473 554
- PATENT ABSTRACTS OF JAPAN Bd. 2002, Nr. 03, 3. April 2002 (2002-04-03) & JP 2001 307528 A (MATSUSHITA ELECTRIC IND CO LTD), 2. November 2001 (2001-11-02)

## Beschreibung

Die Erfindung betrifft eine Anzeige mit Hinterleuchtungseinheit. Aus dem Stand der Technik sind derartige Anzeigen bekannt, wobei die Anzeige ein zu durchleuchtendes Element mit einer zu durchleuchtenden Fläche und eine Lichtquelle aufweist. Aus dem Stand der Technik sind derartige zu durchleuchtende Flächen beispielsweise als Flüssigkristallanzeigen bekannt, die von einer Vielzahl von Licht gebenden Elementen, beispielsweise eine Leuchtdiodenmatrix hinterleuchtet werden. Diese Lichtquellen weisen eine dazugehörige Versorgungs- und Ansteuereinheit sowie ein oder mehrere Projektionsflächen oder eine Flüssigkristallanzeige auf. Der technisch aufwändigste Teil einer solchen Anzeigeeinheit ist die Lichtquelleneinheit mit der dazugehörigen Versorgungs- und Ansteuereinheit. Derzeit bestehen diese Elemente größtenteils aus einem Baugruppenträger, einer Vielzahl von Leuchtdioden einer Größenordnung von z. B. 20 - 40 Stück und aus einer aus mehreren elektronischen Bauteilen bestehenden Ansteuereinheit, sowie aus einer Versorgungseinheit. Der Nachteil einer solchen elektronischen Anzeige ist der hohe schaltungstechnische Aufwand und die große Anzahl an diskreten Bauteilen, die einen hohen finanziellen Aufwand und eine geringe Gestaltungsfreiheit bedingen. Auch ergeben sich Nachteile bei Fertigung einer solchen Anzeige. Um den Baugruppenträger mit an diesen Komponenten auf einem Bauteilträger zu bestücken, sind in der Regel komplexe Bestimmungsmaschinen und dazugehörige aufwändige Prüfmaschinen erforderlich. Weiterhin unterliegen Lichtquellen wie Leuchtdioden einer Streuung an Farbe und Helligkeit, so dass kostenintensive Lichtquellen Auswahlprozesse durchgeführt werden müssen, um eine homogen ausgeleuchtete Anzeige zu realisieren. Schließlich ist die Ausfall- und Fehlerrate bei einer aus vielen Bauteilen bestehenden Anlage sehr hoch.

Aus der US-B1-6473554 ist eine Anzeige mit einer Hinterleuchtungseinheit bekannt, wobei die Anzeige ein zu durchleuchtendes Element mit einer zu durchleuchtenden Fläche und eine Lichtquelle aufweist. Hierbei ist ein Lichtleiteelement mit einer nutzbaren Lichtaustrittsfläche vorhanden, die mindestens der zu durchleuchtenden Fläche entspricht und die hinter der zur durchleuchtenden Fläche angeordnet ist. Weiterhin sind dem Lichtleitelement Reflektoren zugeordnet, die Licht, welches das Lichtleitelement außerhalb der nutzbaren Lichtaustrittfläche verlassen würde, in das Lichtleitelement reflektieren.

Der Erfindung liegt daher die Aufgabe zugrunde, eine Anzeige mit Hinterleuchtungseinheit anzugeben, die einen vergleichbar einfachen und kostengünstigen Aufbau besitzt. Diese Aufgabe wird durch eine Anzeige mit den Merkmalen des Anspruchs 1 gelöst. Hierdurch wird es möglich, mit einem oder einer geringe Anzahl von Lichtquellen eine Hinterleuchtungseinheit aufzubauen. So können als Lichtquellen eine oder eine geringe Anzahl von Leuchtdioden Verwendung finden. Durch diese Lichtquellen und die diesen zugeordneten Lichtumlenk- und Lichtleitelementen ist eine große Material- und Raumeinsparung realisierbar. Weiterhin erfordern eine oder wenige Lichtquellen einen sehr geringen Schaltungs- und Fertigungsaufwand. Die Positionierung der Lichtquellen kann je nach Platzbedarf der Anzeige seitlich oder parallel zur Lichtaustrittsfläche des Lichtleitelementes erfolgen. Hierzu werden nur die Lichtumlenkelemente entsprechend versetzt angeordnet. Das Lichtleitelement ist vorzugsweise etwas größer als die zu durchleuchtende Fläche, beispielsweise eine Flüssigkristallanzeigefläche oder eine sonstige zu durchleuchtende Fläche und ist an den Umrandungen sowie auf dem zu durchleuchtenden Element abgewandten Seite mit Reflektoren versehen, die im einfachsten Fall aus polierten Flächen des Lichtleitelementes bestehen. Vorteilhafterweise bestehen solche Reflektoren aus reflektiv eingefärbtem thermoplastischem Material wie z. B, PBT, PC, PA oder einem duroplastischem Material. Es sind aber auch reflektive Metalle oder Metalllegierungen oder metallbeschichtete Kunststoffe als Reflektoren verwendbar, die dann noch eine zusätzliche Kühlfunktion übernehmen können. Es ist auch möglich, das Lichtleitelement mit Ausnahme der nutzbaren Lichtaustrittsfläche und der Lichtstelle, an dem Licht der Lichtquelle in das prismatische Lichtumlenkelement einkoppelbar ist, mit einem reflektivem Metall zu beschichten, so dass es auch hier zu keinem Lichtverlust kommt. Das Lichtleitelement kann aus einem transparenten oder teiltransparenten Glas oder einem transparenten oder teiltransparenten duroplastischen oder thermoplastischen Kunststoff bestehen. Dadurch, dass das Material des Lichtleitelementes eingefärbt ist, wird die Anzeige insgesamt farbig ausgestaltet. Dadurch, dass der Reflektor aus einer reflektiven Beschichtung des Licht leitenden Elements besteht, wobei die Lichteinkoppelfläche und die nutzbare Lichtaustrittsfläche ausgespart bleiben, ist ein einfacher und effektiver Reflektor realisierbar. Dadurch, dass der Reflektor aus einem oder mehreren diskreten Bauteilen besteht, kann er zusätzlich als Träger des Lichtleitelementes oder sonstiger Bauteile der Anzeige ausgestaltet sein. Zwischen dem Lichtleitelement und dem zu durchscheinenden Element kann zusätzlich ein Diffusor angeordnet sein, um eine noch gleichmäßigere Verteilung des Lichtes zu realisieren. Der Reflektor kann einfacherweise mit einem Baugruppenträger über Schraubverbindungen oder Einrastverbindungen realisiert sein. Eine Einrastverbindung ist einfach herstellbar und auch sicher vor einem Lösen durch Vibrationen, wie diese im Kraftfahrzeug auftreten können. Der Reflektor kann aus einem lichtreflektiven und thermoplastischen oder duroplastischen Material hergestellt sein. Eine besonders gute Reflektion ergibt sich, wenn ein metallbeschichtetes Kunststoffmaterial verwendet wird. Sofern der Reflektor aus einem Metall an einer Metalllegierung oder einem Metallverbundstoff besteht, kann er mit der oder den Lichtquellen direkt oder indirekt thermisch verbunden sein und so die Lichtquelle kühlen. Dadurch, dass sich das Lichtleitelement zu der der Lichtkoppelfläche abgewandten Seite hin verjüngt, wird eine optimale Lichtauskopplung über die Lichtaustrittsfläche erreicht. Das Lichtumlenkelement besteht vorzugsweise entweder aus einer dreieckförmigen prismatischen Aussparung, einer sich konisch verjüngenden prismatischen Aussparung oder aus einer sich konisch verjüngenden unterteilten prismatischen Aussparung. Sofern als Lichtquelle eine Leuchtdiode verwendet wird, ist diese Lichtquelle besonders dauerhaft. Die Lichteinkopplungsfläche kann vorzugsweise entweder senkrecht oder parallel zur Lichtaustrittsfläche angeordnet sein, je nachdem, ob die Lichtquelle seitlich oder unterhalb des auszuleuchtenden Elements angeordnet ist. Dadurch, dass die Lichtaustrittsfläche mit einer Vielzahl von kleinen prismenartigen Zapfen, einer Schicht mit prismenartigen Strukturen oder mit einer Aufrauhung versehen ist, wird die Lichtverteilung weiter optimiert. Dadurch, dass in die Lichteinkoppelfläche Lichtelemente eingesetzt sind, ist eine Anpassung an unterschiedliche Lichtquellen am Strahlcharakteristiken besonders gut zu realisieren. Ein vorhandener Diffusor kann mit einem lichtfilternden oder phosphorisierendem Druck oder Beschichtung versehen sein. Dadurch, dass ein Diffusor direkt mit dem Lichtleitelement durch eine Verbindungsschicht oder einer direkten Materialverbindung in Form von beispielsweise Bedrucken, Aufkleben oder Hinterspritzen kontaktiert ist, wird ein besonders kompakter Aufbau erreicht. Dadurch, dass das Lichtleitelement mit einem Display an der Lichtaustrittsfläche bedruckt ist, wird ein besonders kompakter Aufbau der Anzeige erreicht. Dadurch, dass die Anzeige einen Baugruppenträger aufweist, der eine Leiterplatte mit Eisen- oder Eisenlegierungskern enthält, wird ein guter Wärmeabtransport ermöglicht. Dadurch, dass die Anzeige mit einem Temperatursensor versehen ist, der in einem Steuer- oder Regelkreis die Wärmeleistung der Lichtquelle verändert, wird ein Überhitzen der Anzeige verhindert.

Zwischen der Lichtquelle und der Lichteinkoppelfläche kann ein Farbfilter eingesetzt sein.

Nachfolgend wird die Erfindung anhand der Figuren näher erläutert. Es zeigen:
- Fig. 1:: den Aufbau einer besonders bevorzugten Anzeige,
- Fig. 2:: drei vorteilhafte Ausgestaltungen von prismati- schen Lichtumlenkelementen im Zusammenwirken mit einer Lichtquelle,
- Fig. 3:: ein Anwendungsbeispiel für den Aufbau und die Funktionsweise einer Versorgungs- und Ansteuereinheit.

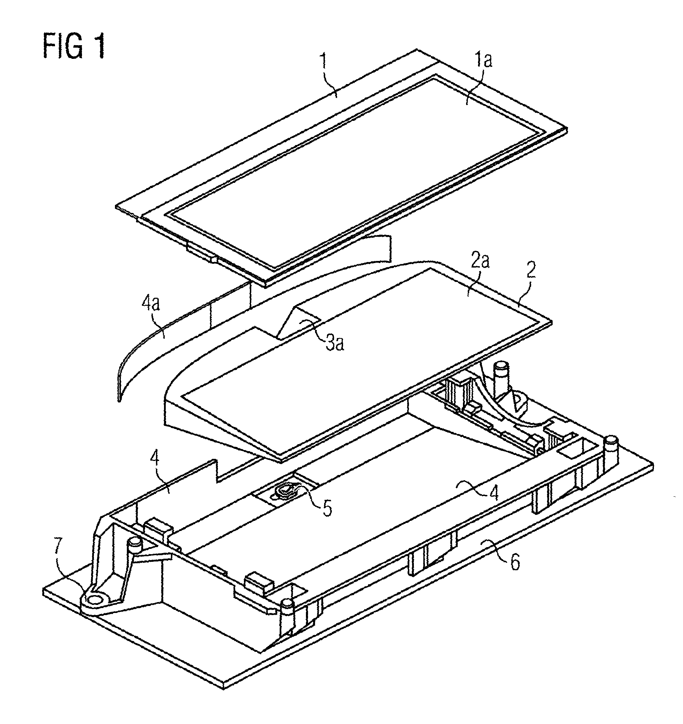

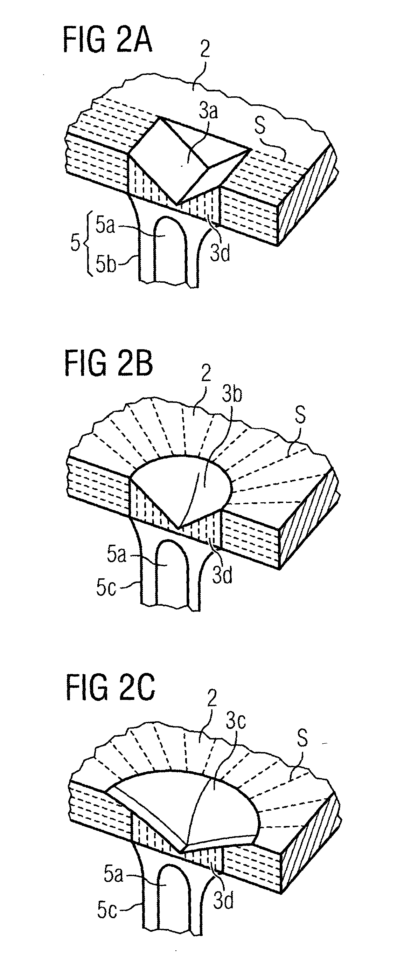

Das erfindungsgemäße Ausführungsbeispiel einer Anzeige in Fig. 1 auszuleuchtendes Element 1, ein Lichtleitelement 2 mit einem Lichtumlenkelement 3a, einem Reflektor 4 bestehend aus einem Reflektorkasten 4a und einem Halbschalenreflektor , eine Lichtquelle 5 und einen Baugruppenträger 6 auf. Der Reflektorkasten 4a ist als Träger ausgestaltet und weist zusätzlich ein Verbindungselement 7 auf. In den Reflektorkasten 4a ist das Lichtleitelement 2 und der Halbschalenreflektor einsetzbar. Weiterhin ist das auszuleuchtende Element 1 in den Reflektorkasten 4a einrastbar. In Fig. 2 erkennt man prismatische Umlenkelemente 3a, 3b und 3c jeweils mit einem Teil des Lichtleitelementes 2. Unterhalb der prismatischen Lichtumlenkelemente 3a, 3b, 3c ist eine Lichtquelle 5, bestehend aus einer Leuchtdiode 5a und einem Lichtquellenreflektor 5b, dargestellt. Das in der Leuchtdiode 5a erzeugte Licht wird entweder direkt oder über den Lichtquellenreflektor 5b über eine Lichteinkoppelfläche 3d in die prismatischen Lichtumlenkelemente 3a, 3b, 3c eingekoppelt. Das dreieckförmige prismatische Lichtumlenkelement 3a lenkt das Licht vornehmlich in zwei entgegen gesetzten Richtungen, wie durch die strichliert dargestellten beispielhaften Lichtstrahlen S dargestellt. Das konisch sich verjüngende prismatische Lichtumlenkelement 3b ermöglicht es, einen größeren Anteil des einzukoppelnden Lichtes auch in die dem Lichtumlenkelement 3b entgegen gesetzten Seiten des Lichtleitelementes 2. Das konisch unterteilte sich verjüngende prismatische Lichtumlenkelement 3c ist eine konstruktive und lichttechnische Kombination der Lichtumlenkelemente 3a, 3b. Das Lichtumlenkelement 3a wird vorzugsweise für seitlich längere Lichtleitelemente 2 eingesetzt, das Lichtumlenkelement 3b bei einem in seiner geometrischen Flächenausdehnung mit ähnlichen Seitenlängenverhältnissen Lichtleitelementen und das Lichtumlenkelement 3c für Lichtleitelemente, die eine geometrische Kombination aus den Elementen 3a, 3b darstellen. Das im Lichtleitelement 2 vorhandene Licht wird direkt Lichtaustrittsfläche 2a (Fig. 1) abgestrahlt oder so lange durch die Reflektoren 4 reflektiert, bis es das Lichtleitelement 2 an der Lichtaustrittsfläche 2a verlässt und dann die zu durchleuchtende Fläche durchdringt und damit beleuchtet.

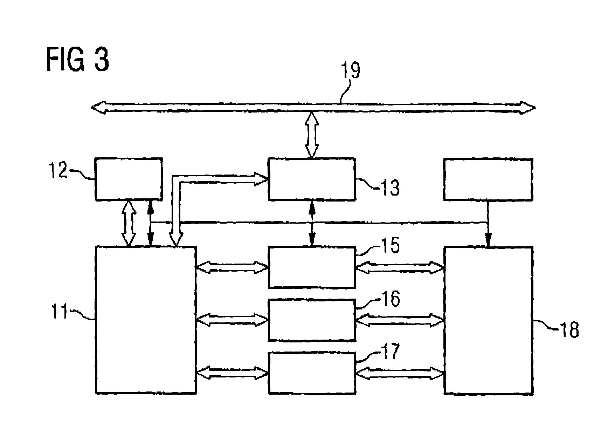

Fig. 3 zeigt in einem Anwendungsbeispiel den Aufbau und die Funktionsweise einer Versorgungs- und Ansteuereinheit mit Temperaturreglung für die Anzeige. Dargestellt wird ein Verarbeitungsmodul 11, welches über einen Übertrager 13 und ein Netzwerk 19 Signale zur Steuerung einer Anzeige 18 empfängt. Um die Anzeige definiert anzusteuern, nutzt das Verarbeitungsmodul 11 hierzu Daten, z. B. Temperaturkurven aus einem Speicher 12 und eines Temperaturtreibers 15. Mittels Displaytreibers 16 und Hinterleuchtungstreiber 17 wird die Anzeige 18 bei relevanten Temperaturänderungen in Helligkeit und Kontrast nachgeregelt.

## Patentansprüche

1. Anzeige mit einer Hinterleuchtungseinheit, wobei die Anzeige ein zu durchleuchtendes Element (1) mit einer zu durchleuchtenden Fläche (1a) und eine Lichtquelle (5) aufweist, wobei das Lichtleitelement (2) eine nutzbare Lichtaustrittsfläche (2a) aufweist, die mindestens der zu durchleuchtenden Fläche (1a) entspricht und die hinter der zu durchleuchtenden Fläche (1a) angeordnet ist und dem Lichtleitelement (2) Reflektoren (4, 4a) zugeordnet sind, wobei die Anzeige Reflektoren (4, 4a) aufweist und wobei mittels der Reflektoren (4, 4a) Licht, welches das Lichtleitelement (2) außerhalb der nutzbaren Lichtaustrittsfläche (2a) verlassen würde, in das Lichtleitelement (2) reflektierbar ist, **dadurch gekennzeichnet, dass** das Lichtleitelement (2) ein prismatisches Lichtumlenkelement (3a, 3b, 3c) aufweist und dass das Licht der Lichtquelle (5) in das prismatische Lichtumlenkelement (3a, 3b, 3c) über eine Lichteinkoppelfläche (3d) einkoppelbar ist.

2. Anzeige nach Anspruch 1, **dadurch gekennzeichnet, dass** das Lichtleitelement (2) aus transparentem oder teiltransparentem Glas oder lichtleitendem, thermoplastischem oder duroplastischem Kunststoff besteht.

3. Anzeige nach Anspruch 2, **dadurch gekennzeichnet, dass** das Lichtleitelement(2) aus eingefärbtem Material besteht.

4. Anzeige nach einem der vorstehenden Ansprüche, **dadurch gekennzeichnet, dass** der Reflektor (4) aus einer reflektierenden Beschichtung des Lichtleitelementes (2) besteht, wobei zumindest die Lichteinkoppelfläche (3d) und die nutzbare Lichtaustrittsfläche (2a) ausgespart bleiben.

5. Anzeige nach einem der Ansprüche 1 bis 3, **dadurch gekennzeichnet, dass** der Reflektor (4, 4a, ) aus einem oder mehreren diskreten Bauteilen besteht.

6. Anzeige nach Anspruch 5, **dadurch gekennzeichnet, dass** der Reflektor (4) als Träger des Lichtleitelementes (2) und des zu durchleuchtenden Elementes (1) in Form eines Projektionselementes oder einer Flüssigkristallanzeige ausgestaltet ist.

7. Anzeige nach einem der vorstehenden Ansprüche, **dadurch gekennzeichnet, dass** zwischen dem Lichtleitelement (2) und dem zu durchleuchtenden Element ein Diffusor angeordnet ist.

8. Anzeige nach einem der Ansprüche 5 bis 7, **dadurch gekennzeichnet, dass** der Reflektor (4) mit einem Baugruppenträger (5) über eine Schraubverbindung mittels eines Verbindungselementes (7) oder einer Einrastverbindung fixiert ist.

9. Anzeige nach einem der vorstehenden Ansprüche, **dadurch gekennzeichnet, dass** der Reflektor (4, 4a, ) aus einem Licht reflektierendem thermoplastischem oder duroplastischem Material besteht.

10. Anzeige nach einem der vorstehenden Ansprüche, **dadurch gekennzeichnet, dass** der Reflektor (4, 4a, ) aus einem reflektierendem metallbeschichtetem Kunststoffmaterial besteht.

11. Anzeige nach einem der Ansprüche 1 - 9, **dadurch gekennzeichnet, dass** der Reflektor (4, 4a, ) aus einem Metall, aus einer Metalllegierung oder aus einem Metallverbundwerkstoff besteht, die mit Wärmeableitstellen der Lichtquelle (5) direkt oder indirekt verbunden ist.

12. Anzeige nach einem der vorstehenden Ansprüche, **dadurch gekennzeichnet, dass** das Lichtleitelement (2) sich zu der dem prismatischen Lichtumlenkelement (3a, 3b, 3c) abgewandten Seite verjüngt.

13. Anzeige nach einem der vorstehenden Ansprüche, **dadurch gekennzeichnet, dass** das Lichtumlenkelement (3a, 3b, 3c) aus einer dreieckförmigen prismatischen Aussparung, einer sich konisch verjüngenden prismatischen Aussparung oder aus einer sich konisch verjüngenden unterteilten prismatischen Aussparung besteht.

14. Anzeige nach einem der vorstehenden Ansprüche, **dadurch gekennzeichnet, dass** die Lichtquelle (5) eine Leuchtdiode (5a) aufweist.

15. Anzeige nach einem der vorstehenden Ansprüche, **dadurch gekennzeichnet, dass** die Lichteinkoppelfläche (3d) senkrecht oder parallel zur Lichtaustrittsfläche (2a) angeordnet ist.

16. Anzeige nach einem der vorstehenden Ansprüche, **dadurch gekennzeichnet, dass** die Lichtaustrittsfläche (2a) mit einer Vielzahl von kleinen prismenartigen Zapfen, einer Schicht mit prismenartigen Strukturen oder mit einer Aufrauhung versehen ist.

17. Anzeige nach einem der vorstehenden Ansprüche, **dadurch gekennzeichnet, dass** in die Lichteinkoppelfläche (3d) Lichtformelemente einsetzbar sind.

18. Anzeige nach Anspruch 7, **dadurch gekennzeichnet, dass** der Diffusor mit einem Licht filternden oder phosphorisierendem Druck oder einer Beschichtung versehen ist.

19. Anzeige nach Anspruch 7, **dadurch gekennzeichnet, dass** der Diffusor direkt mit dem Lichtleitelement (2) durch eine Verbindungsschicht oder einer direkten Materialverbindung (Bedrucken, Aufkleben oder Hinterspritzen) kontaktiert ist.

20. Anzeige nach einem der vorstehenden Ansprüche, **dadurch gekennzeichnet, dass** das Lichtleitelement (2) an der Lichtaustrittsfläche (2a) mit einem Display bedruckt ist.

21. Anzeige nach einem der vorstehenden Ansprüche, **dadurch gekennzeichnet, dass** die Anzeige einen Baugruppenträger (6) aufweist, der eine Leiterplatte mit Eisen- oder Eisenlegierungskern enthält.

22. Anzeige nach einem der vorstehenden Ansprüche, **dadurch gekennzeichnet, dass** die Lichtquelle (5) mit einem Temperatursensor versehen ist, der in einem Steuer- oder Regelkreis (11 - 19) die Wärmeleistung der Lichtquelle (5) verändert.

23. Anzeige nach einem der vorstehenden Ansprüche, **dadurch gekennzeichnet, dass** zwischen der Lichtquelle (5) und der Lichteinkoppelfläche (3d) ein Farbfilter eingesetzt ist.

## Claims

1. Display with a back-lighting unit, the display having an element (1) which is to be transilluminated and has a surface (1a) to be transilluminated and a light source (5), the light-guiding element (2) having a useful light-exit surface (2a) which corresponds at least to the surface (1a) to be transilluminated, and which is arranged behind the surface (1a) to be transilluminated, and the light-guiding element (2) being assigned reflectors (4, 4a), the display having reflectors (4, 4a) and it being possible for light which would leave the light-guiding element (2) outside the useful light-exit surface (2a) to be reflected into the light-guiding element (2) by means of the reflectors (4, 4a), **characterized in that** the light-guiding element (2) has a prismatic light-deflecting element (3a, 3b, 3c), and **in that** the light of the light source (5) can be coupled into the prismatic light-deflecting element (3a, 3b, 3c) via a light-coupling surface (3d).

2. Display according to Claim 1, **characterized in that** the light-guiding element (2) consists of transparent or semitransparent glass or light-guiding thermoplastic or thermosetting plastic.

3. Display according to Claim 2, **characterized in that** the light-guiding element (2) consists of coloured material.

4. Display according to one of the preceding claims, **characterized in that** the reflector (4) consists of a reflecting coating of the light-guiding element (2), at least the light-coupling surface (3d) and the useful light-exit surface (2a) remaining omitted.

5. Display according to one of Claims 1 to 3, **characterized in that** the reflector (4, 4a) consists of one or more discrete components.

6. Display according to Claim 5, **characterized in that** the reflector (4) is configured as a carrier of the light-guiding element (2) and of the element (1) to be transilluminated in the form of a projection element or a liquid crystal display.

7. Display according to one of the preceding claims, **characterized in that** a diffuser is arranged between the light-guiding element (2) and the element to be transilluminated.

8. Display according to one of Claims 5 to 7, **characterized in that** the reflector (4) is fixed to a module carrier (5) via a screw connection by means of a connecting element (7) or a latching connection.

9. Display according to one of the preceding claims, **characterized in that** the reflector (4, 4a) consists of a thermoplastic or thermosetting material which reflects light.

10. Display according to one of the preceding claims, **characterized in that** the reflector (4, 4a) consists of a reflecting metal-coated plastic material.

11. Display according to one of Claims 1-9, **characterized in that** the reflector (4, 4a) consists of a metal, of a metal alloy or of a metal composite which is connected directly or indirectly to heat removal points of the light source (5).

12. Display according to one of the preceding claims, **characterized in that** the light guiding element (2) tapers towards the end averted from the prismatic light-deflecting element (3a, 3b, 3c).

13. Display according to one of the preceding claims, **characterized in that** the light deflecting element (3a, 3b, 3c) comprises a triangular prismatic cutout, a conically tapering prismatic cutout, or a conically tapering subdivided prismatic cutout.

14. Display according to one of the preceding claims, **characterized in that** the light source (5) has a light-emitting diode (5a).

15. Display according to one of the preceding claims, **characterized in that** the light-coupling surface (3d) is arranged in a fashion perpendicular or parallel to the light exit surface (2a).

16. Display according to one of the preceding claims, **characterized in that** the light exit surface (2a) is provided with a multiplicity of small prism-like pins, a layer with prism-like structures, or with a roughening.

17. Display according to one of the preceding claims, **characterized in that** light-shaping elements can be inserted into the light-coupling surface (3d).

18. Display according to Claim 7, **characterized in that** the diffuser is provided with a light-filtering or phosphorizing print or a coating.

19. Display according to Claim 7, **characterized in that** the diffuser makes direct contact with the light-guiding element (2) by means of a connecting layer or of a direct material connection (printing, adhesion or injection backmoulding).

20. Display according to one of the preceding claims, **characterized in that** the light guiding element (2) is printed with a display on the light exit surface (2a).

21. Display according to one of the preceding claims, **characterized in that** the display has a module carrier (6) which includes a printed circuit board with an iron or an iron alloy core.

22. Display according to one of the preceding claims, **characterized in that** the light source (5) is provided with a temperature sensor which varies the thermal power of the light source (5) in an open-loop or closed-loop control circuit (11-19).

23. Display according to one of the preceding claims, **characterized in that** a colour filter is inserted between the light source (5) and the light-coupling surface (3d).

## Revendications

1. Affichage comportant une unité de rétro-éclairage, où l'affichage a un élément (1) à éclairer par transparence comportant une surface (1a) à éclairer par transparence et une source de lumière (5), où le guide optique (2) a une surface utile de sortie (2a) de la lumière qui correspond au moins à la surface (1a) à éclairer par transparence et qui est placée derrière la surface (1a) à éclairer par transparence et où des réflecteurs (4, 4a) sont affectés au guide optique (2), où l'affichage comporte des réflecteurs (4, 4a) et où, au moyen des réflecteurs (4, 4a), de la lumière, qui sortirait du guide optique (2) à l'extérieur de la surface utile de sortie (2a) de la lumière, peut être réfléchie dans le guide optique (2), **caractérisé par le fait que** le guide optique (2) comporte un élément prismatique (3a, 3b, 3c) de déviation de la lumière et que la lumière de la source lumineuse (5) est couplée dans l'élément prismatique (3a, 3b, 3c) de déviation de la lumière par l'intermédiaire d'une surface de couplage optique (3d).

2. Affichage selon la revendication 1, **caractérisé par le fait que** le guide optique (2) se compose de verre transparent ou partiellement transparent ou de matière thermoplastique ou duroplastique conduisant la lumière.

3. Affichage selon la revendication 2, **caractérisé par le fait que** le guide optique (2) se compose de matière colorée.

4. Affichage selon l'une des revendications précédentes, **caractérisé par le fait que** le réflecteur (4) se compose d'un revêtement réfléchissant appliqué sur le guide optique (2), où au moins la surface de couplage optique (3d) et la surface utile de sortie (2a) de la lumière ne sont pas recouvertes.

5. Affichage selon l'une des revendications 1 à 3, **caractérisé par le fait que** le réflecteur (4, 4a) se compose d'un ou de plusieurs composants discrets.

6. Affichage selon la revendication 5, **caractérisé par le fait que** le réflecteur (4) est conçu en tant que support du guide optique (2) et de l'élément (1) à éclairer par transparence sous forme d'un élément projecteur ou d'un affichage à cristaux liquides.

7. Affichage selon l'une des revendications précédentes, **caractérisé par le fait qu'**un diffuseur est placé entre le guide optique (2) et l'élément à éclairer par transparence.

8. Affichage selon l'une des revendications 5 à 7, **caractérisé par le fait que** le réflecteur (4) est fixé à un support de composant (5), au moyen d'un élément de liaison (7) ou d'une liaison encliquetée, par l'intermédiaire d'une liaison vissée.

9. Affichage selon l'une des revendications précédentes, **caractérisé par le fait que** le réflecteur (4, 4a) se compose d'une matière thermoplastique ou duroplastique réfléchissante.

10. Affichage selon l'une des revendications précédentes, **caractérisé par le fait que** le réflecteur (4, 4a) se compose d'une matière plastique réfléchissante métallisée.

11. Affichage selon l'une des revendications 1 - 9, **caractérisé par le fait que** le réflecteur (4, 4a) se compose d'un métal, d'un alliage métallique ou d'une matière composite métallique, laquelle est liée, directement ou indirectement, à des points de dissipation calorifique de la source de lumière (5).

12. Affichage selon l'une des revendications précédentes, **caractérisé par le fait que** le guide optique (2) s'amincit du côté opposé à l'élément prismatique (3a, 3b, 3c) de déviation de la lumière.

13. Affichage selon l'une des revendications précédentes, **caractérisé par le fait que** l'élément (3a, 3b, 3c) de déviation de la lumière se compose d'un évidement prismatique triangulaire, d'un évidement prismatique s'amincissant en cône ou d'un évidement prismatique s'amincissant en cône section par section.

14. Affichage selon l'une des revendications précédentes, **caractérisé par le fait que** la source de lumière (5) comporte une diode luminescente (5a).

15. Affichage selon l'une des revendications précédentes, **caractérisé par le fait que** la surface de couplage optique (3d) est disposée perpendiculairement ou parallèlement à la surface utile de sortie (2a) de la lumière.

16. Affichage selon l'une des revendications précédentes, **caractérisé par le fait que** la surface utile de sortie (2a) de la lumière est dotée d'une pluralité de petits pivots en forme de prismes, d'une couche de structures en forme de prismes ou d'une surface rugueuse.

17. Affichage selon l'une des revendications précédentes, **caractérisé par le fait que** des éléments lumineux façonnés peuvent être insérés dans la surface de couplage optique (3d).

18. Affichage selon la revendication 7, **caractérisé par le fait que** le diffuseur est doté d'une impression filtrant la lumière ou phosphorescente ou d'un revêtement.

19. Affichage selon la revendication 7, **caractérisé par le fait que** le diffuseur est contacté directement avec le guide optique (2) grâce à une couche de liaison ou par une liaison directe (impression, collage ou projection) des matières.

20. Affichage selon l'une des revendications précédentes, **caractérisé par le fait qu'**un écran est imprimé sur le guide optique (2) au niveau de la surface utile de sortie (2a) de la lumière.

21. Affichage selon l'une des revendications précédentes, **caractérisé par le fait que** l'affichage comporte un support de composant (6) qui comprend une carte à circuits imprimés avec un noyau en fer ou en alliage ferreux.

22. Affichage selon l'une des revendications précédentes, **caractérisé par le fait que** la source de lumière (5) est dotée d'un détecteur de température qui, dans un circuit de commande ou de régulation (11 - 19), modifie la puissance calorifique de la source de lumière (5).

23. Affichage selon l'une des revendications précédentes, **caractérisé par le fait qu'**un filtre coloré est inséré entre la source de lumière (5) et la surface de couplage optique (3d).
